(19) Europäisches Patentamt
European Patent Office
Office européen des brevets

(11) **EP 3 410 155 A1**

(12) **EUROPEAN PATENT APPLICATION**
published in accordance with Art. 153(4) EPC

(43) Date of publication:
**05.12.2018 Bulletin 2018/49**

(51) Int Cl.:
**G01S 17/58** (2006.01)     **G01P 5/26** (2006.01)
**G01S 17/95** (2006.01)

(21) Application number: **16887902.1**

(22) Date of filing: **27.01.2016**

(86) International application number:
**PCT/JP2016/052297**

(87) International publication number:
**WO 2017/130315 (03.08.2017 Gazette 2017/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Mitsubishi Electric Corporation**
**Chiyoda-ku**
**Tokyo 100-8310 (JP)**

(72) Inventors:
• **IMAKI, Masaharu**
  **Tokyo 100-8310 (JP)**
• **KOTAKE, Nobuki**
  **Tokyo 100-8310 (JP)**
• **KAMEYAMA, Shumpei**
  **Tokyo 100-8310 (JP)**

(74) Representative: **Sajda, Wolf E. et al**
**Meissner Bolte Patentanwälte**
**Rechtsanwälte Partnerschaft mbB**
**Postfach 86 06 24**
**81633 München (DE)**

(54) **COHERENT LIDAR DEVICE**

(57)     Included are: a fast Fourier analyzer (1301) to obtain a received spectrum for each of time gates by performing fast Fourier transform on a received signal for each of the time gates; a signal integration determiner (1302) to determine the necessity of integration of the received spectrum obtained by the fast Fourier analyzer (1301) for each of the time gates; a spectrum integrator (1304) to perform integration of the received spectrum obtained by the fast Fourier analyzer (1303) depending on a determination result by the signal integration deter-miner (1302); a frequency shift calculator (1306) to calculate an amount of a frequency shift with respect to the laser light emitted by the optical transceiver (11) from the received spectrum integrated by the spectrum integrator (1304); and a wind speed calculator (1307) to calculate the wind speed in a direction in which the laser light is emitted by the optical transceiver (11) from the amount of the frequency shift calculated by the frequency shift calculator (1306).

FIG. 1

EP 3 410 155 A1

**Description**

Technical Field

The present invention relates to coherent lidars to measure wind speeds in the atmosphere.

Background Art

Heretofore, coherent lidars to measure wind speeds in the atmosphere have been known (See, e.g., Patent Literature 1). In these coherent lidars, a reception signal is obtained by emitting laser light into the atmosphere, receiving scattered light from the atmosphere, and performing heterodyne detection. Then, a received spectrum is obtained by performing Fourier transform on this reception signal. The received spectrum includes a noise spectrum in addition to a signal spectrum. Accordingly, to improve a reception signal-to-noise ratio (SNR), acquisition of a received spectrum is performed two or more times and the spectra are integrated.

Citation List

Patent Literature

Patent Literature 1: WO 2014/002564 A

Summary of the Invention

Technical Problem

On the other hand, in a case where laser light emitted from a coherent lidar is blocked, a signal from the atmosphere cannot be received, and thus data includes only noise. In conventional coherent lidars, however, regardless of whether laser light is unexpectedly blocked or not, received spectra are integrated every time laser light is emitted. Therefore, there is a problem that a reception SNR deteriorates when there is a period during which laser light is blocked as described above.

Moreover, in order to secure the measurement accuracy of wind speed, it is necessary to obtain an intended reception SNR. Suppose the level of a signal spectrum is S, that the level of a noise spectrum is N, and that the number of times of integration is n. Then reception SNR is expressed by Equation (1) as follows:

$$\mathrm{S\,N} = \frac{S}{N}\sqrt{n} \qquad (1)$$

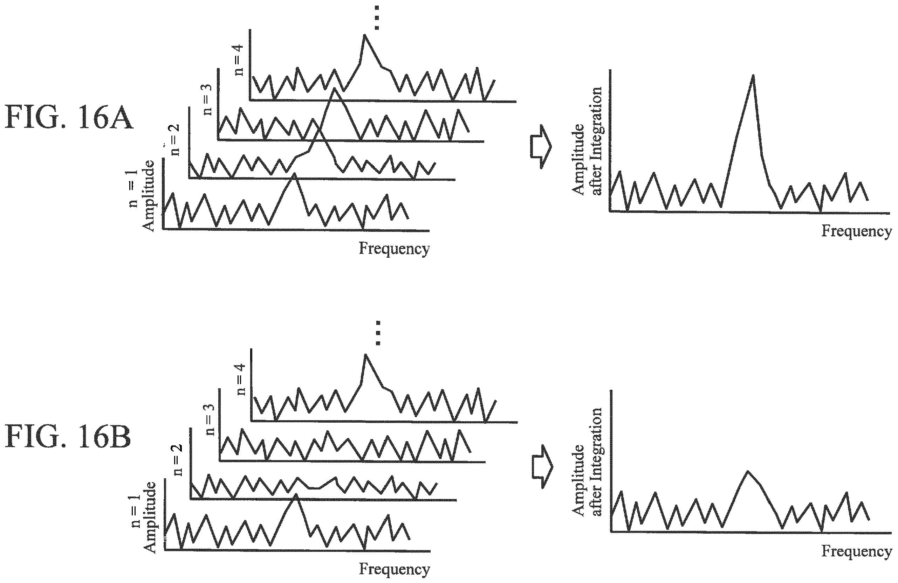

FIGS. 16A and 16B show diagrams for explaining integration operations of received spectra by a conventional coherent lidar. FIG. 16A shows diagrams illustrating a received spectrum for each time gate and a received spectrum after integration in a case where laser light is emitted into the atmosphere without being blocked. FIG. 16B shows diagrams illustrating a received spectrum for each time gate and a received spectrum after integration in a case where laser light is blocked in periods corresponding to received spectra acquired at the second and third times (n = 2, 3).

It is understood from FIGS. 16A and 16B that the noise spectra are almost the same in the received spectra after integration, however, the signal spectrum is lower in the case of FIG. 16B than in the case of FIG. 16A. That is, in the case of FIG. 16B, the reception SNR is deteriorated.

Embodiments in this invention have been made in order to solve the problem as described above, and an object of the embodiments is to provide a coherent lidar capable of preventing deterioration of the reception SNR even in a case where there is a period during which laser light is blocked.

Solution to the Problem

A coherent lidar according to an aspect of embodiments includes:

an optical transceiver to obtain a received signal by emitting laser light of a single frequency into an atmosphere, receiving scattered light from the atmosphere, and performing heterodyne detection;
an A/D converter to convert the received signal obtained by the optical transceiver into a digital signal;
a fast Fourier analyzer to obtain a received spectrum for each of time gates by performing fast Fourier transform on the received signal converted into the digital signal by the A/D converter for each of the time gates;

a signal integration determiner to determine necessity of integration of each of the received spectra obtained by the fast Fourier analyzer for each time gate;

a spectrum integrator to perform integration of the received spectra obtained by the fast Fourier analyzer depending on a determination result by the signal integration determiner;

a frequency shift calculator to calculate an amount of a frequency shift with respect to the laser light emitted by the optical transceiver, from a received spectrum obtained by integration by the spectrum integrator; and

a wind speed calculator to calculate a wind speed in a direction of emission of the laser light from the optical transceiver, from the amount of the frequency shift calculated by the frequency shift calculator.

Advantageous Effects of Invention

According to an aspect of the embodiments, due to the configuration as described above, deterioration of a reception SNR can be prevented even in a case where there is a period during which laser light is blocked.

Brief Description of Drawings

FIG. 1                      is a block diagram illustrating a configuration example of a coherent lidar according to a First Embodiment of the invention.

FIG. 2                      is a block diagram illustrating a functional configuration example of a signal processor according to the First Embodiment of the invention.

FIG. 3A                     is a flowchart illustrating an operation example of the signal processor according to the First Embodiment of the invention.

FIG. 3B                     is a flowchart illustrating an operation example of the signal processor according to the First Embodiment of the invention.

FIGS. 4A and 4B             are diagrams for explaining the operation of a signal integration determiner according to the First Embodiment of the invention, the diagrams illustrating the case where laser light is emitted to the atmosphere without being blocked and the case where laser light is blocked immediately after emission, respectively.

FIG. 5                      is a diagram for explaining the operation of a spectrum integrator in the First Embodiment of the invention and is a diagram illustrating a received spectrum for each time gate in a case where there is a period during which laser light is blocked and a received spectrum after integration.

FIGS. 6A and 6B             are diagrams for explaining the operation of a noise level corrector according to the First Embodiment of the invention and are, respectively, a diagram illustrating a received spectrum and a noise spectrum and a diagram illustrating a received spectrum after noise level correction.

FIG. 7A                     is a flowchart illustrating another operation example of the signal processor according to the First Embodiment of the invention.

FIG. 7B                     is a flowchart illustrating still another operation example of the signal processor according to the First Embodiment of the invention.

FIG. 8A                     is a flowchart illustrating yet another operation example of the signal processor according to the First Embodiment of the invention.

FIG. 8B                     is a flowchart illustrating a further operation example of the signal processor according to the First Embodiment of the invention.

FIGS. 9A to 9C              are diagrams illustrating a case where the coherent lidar according to the First Embodiment of the invention is mounted on a wind power generator and are a side view, a front view, and a top view, respectively.

FIGS. 10A to 10C      are diagrams for explaining the operation of the signal integration determiner in the configuration illustrated in FIGS. 9A to 9C and are, respectively, a diagram illustrating a case where only scattered light from aerosol is received, a diagram illustrating a case where scattered light from the aerosol and reflected light from a blade are received, and a diagram illustrating a case where only reflected light from the blade is received.

FIG. 11      is a block diagram illustrating a functional configuration example of a signal processor according to a Second Embodiment of the invention.

FIG. 12A      is a flowchart illustrating an operation example of the signal processor according to the Second Embodiment of the invention.

FIG. 12B      is a flowchart illustrating an operation example of the signal processor according to the Second Embodiment of the invention.

FIG. 13      is a diagram illustrating an example of an emission pattern of laser light in the case where the coherent lidar according to the Second Embodiment of the invention is mounted on a wind power generator.

FIGS. 14A to 14D      are diagrams illustrating an example of blocking of laser light at each time in the configuration illustrated in FIG. 13.

FIG. 15      is a diagram illustrating an example of an integration determination signal in the configuration illustrated in FIG. 13.

FIGS. 16A and 16B      are diagrams for explaining an integration operation of received spectra by a conventional coherent lidar and are, respectively, a diagram illustrating a received spectrum for each time gate and a received spectrum after integration in a case where laser light is emitted to the atmosphere without being blocked and a diagram illustrating a received spectrum for each time gate and a received spectrum after integration in a case where there is a period during which the laser light is blocked.

## Description of Embodiments

Hereinafter, embodiments according to the invention are described in detail with reference to the drawings.

## First Embodiment

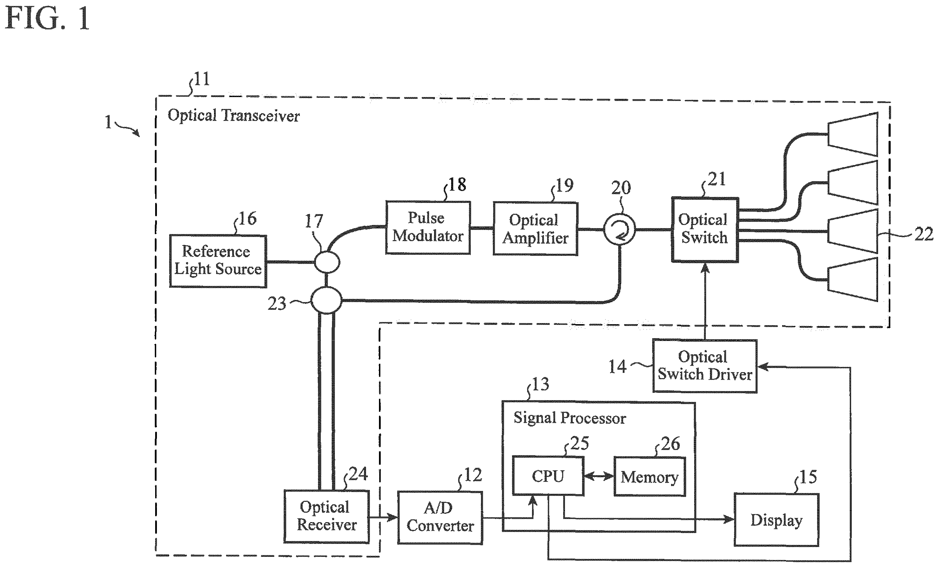

FIG. 1 is a block diagram illustrating a configuration example of a coherent lidar 1 according to the First Embodiment of the invention.

As illustrated in FIG. 1, the coherent lidar 1 according to the First Embodiment includes an optical transceiver 11, an A/D converter 12, a signal processor 13, an optical switch driver 14, and a display 15. In FIG. 1, thick connecting lines represent optical fiber cables, and thin connecting lines represent electric signal cables.

The optical transceiver 11 obtains a reception signal by emitting laser light of a single frequency into the atmosphere, receiving scattered light from the atmosphere, and performing heterodyne detection. The optical transceiver 11 includes a reference light source (light source) 16, an optical distributor 17, a pulse modulator 18, an optical amplifier 19, an optical circulator 20, an optical switch 21, a plurality of optical antennas 22, an optical coupler 23, and an optical receiver 24.

The reference light source 16 emits continuous-wave laser light of a single frequency. The linewidth of the emission spectrum of the laser light is less than or equal to several MHz (for example, 10 MHz). The reference light source 16 includes, for example, any one of a semiconductor laser, a fiber laser, and a solid-state laser, or a combination thereof. The laser light emitted by the reference light source 16 is output to the optical distributor 17.

The optical distributor 17 splits the laser light emitted by the reference light source 16. A laser light splitting ratio may be 9:1, for example, between the laser light for signal light to be emitted into the atmosphere and the laser light for reference light used in heterodyne detection. The optical distributor 17 may be a beam splitter, for example. One laser light (signal light) obtained by splitting performed by the optical distributor 17 is output to the pulse modulator 18, and the other laser light (reference light) is output to the optical coupler 23.

The pulse modulator 18 performs pulse intensity modulation and frequency shift on the one laser light obtained by splitting performed by the optical distributor 17. At this time, the pulse modulator 18 performs pulse intensity modulation such that the light intensity of the laser light has a Gaussian shape or rectangular shape to modulate the laser light into pulses. Furthermore, the pulse modulator 18 performs frequency shift on the laser light by a predetermined value (for example, more than or equal to 20 MHz and less than or equal to 200 MHz) in accordance with a trigger signal input from the outside.

The pulse modulator 18 includes, for example, an acousto-optic element or a modulation element using a lithium niobate crystal. The laser light performed with the pulse intensity modulation and the frequency shift by the pulse modulator 18 is output to the optical amplifier 19.

The optical amplifier 19 amplifies the intensity of the laser light performed with the pulse intensity modulation and the frequency shift by the pulse modulator 18. The optical amplifier 19 includes, for example, a solid-state laser amplifier such as an optical fiber amplifier, a waveguide type amplifier and a slab type amplifier, and a semiconductor optical amplifier. The laser light whose intensity is amplified by the optical amplifier 19 is output to the optical circulator 20.

The optical circulator 20 switches an output route depending on a route of a laser light input thereto. Here, when the laser light is output from the optical amplifier 19, the optical circulator 20 outputs the laser light to the optical switch 21. On the other hand, when laser light is output from the optical antennas 22 via the optical switch 21, the optical circulator 20 outputs the laser light to the optical coupler 23. This optical circulator 20 includes, for example, a polarization beam splitter and a wavelength plate.

The optical switch 21 is used to switch the emission direction of the laser light output from the optical circulator 20. The optical switch 21 switches the emission direction of the laser light under control by the optical switch driver 14 and outputs the laser light from the optical circulator 20 to an optical antenna 22 corresponding to the emission direction. The optical switch 21 includes, for example, a polarization beam splitter and a wavelength plate.

The optical antenna 22 enlarges the beam diameter of the laser light output from the optical switch 21 and then emits the laser light into the atmosphere. The laser light emitted into the atmosphere by the optical antenna 22 is scattered by aerosol floating in the atmosphere or is reflected by a hard target. Then, the optical antennas 22 receive scattered light (reflected light) from the atmosphere, which is a part of the emitted laser light. The optical antennas 22 include, for example, a plurality of refractive lenses or a plurality of mirrors. The scattered light received by the optical antennas 22 is output to the optical circulator 20 via the optical switch 21.

The optical coupler 23 mixes and splits the other laser light (reference light) obtained by splitting performed by the optical distributor 17 and the scattered light output from the optical circulator 20. At this time, the optical coupler 23 splits the mixed light equally. The light mixed and split by the optical coupler 23 is output to the optical receiver 24.

The optical receiver 24 obtains a received signal by performing heterodyne detection on the light mixed and split by the optical coupler 23. That is, the optical receiver 24 extracts a beat signal between the reference light from the optical distributor 17 and the scattered light from the optical circulator 20 and converts the beat signal into an electric signal. The optical receiver 24 includes a balanced receiver that reduces common mode noise by using, for example, two photodiodes. The received signal obtained by the optical receiver 24 is output to the A/D converter 12.

The A/D converter 12 converts a received signal (analog signal) obtained by the optical receiver 24 into a digital signal. The received signal converted into a digital signal by the A/D converter 12 is output to the signal processor 13.

The signal processor 13 measures a wind speed in the atmosphere by using the received signal converted into a digital signal by the A/D converter 12. The signal processor 13 further outputs a control signal for designating a next emission direction of the laser light to the optical switch driver 14 at a predetermined timing. Data indicating a measurement result by the signal processor 13 is output to the display 15.

The signal processor 13 is implemented by, for example, a central processing unit (CPU, also referred to as a processing unit, an arithmetic unit, a microprocessor, a microcomputer, a processor, or a digital signal processor (DSP)) 25 that executes a program stored in a memory 26 or a combination of the CPU 25 and a field-programmable gate array (FPGA; not illustrated). In a case where the signal processor 13 is implemented by the CPU 26, respective functions of the signal processor 13 are realized by software, firmware, or a combination of software and firmware. Software or firmware is described as one or more programs and stored in the memory 26.

The signal processor 13 reads and executes the programs stored in the memory 26 and thereby implements each of the functions. That is, the signal processor 13 includes the memory 26 to store a program whose execution results in execution of each of the functions. These programs cause a computer to execute a procedure or a method of the signal processor 13. Here, the memory 26 may be a nonvolatile or a volatile semiconductor memory such as a RAM, a ROM, a flash memory, an EPROM, and an EEPROM, a magnetic disk, a flexible disk, an optical disk, a compact disk, a mini disk, a DVD, or the like.

The optical switch driver 14 causes the optical switch 21 to switch an emission direction of laser light in accordance with the control signal output from the signal processor 13. In the First Embodiment, the optical switch driver 14 causes the optical switch 21 to switch the emission direction of the laser light to an emission direction designated by the control signal. The optical switch driver 14 includes, for example, a microcomputer or a D/A converter.

The display 15 displays data indicating the measurement result by the signal processor 13. Although FIG. 1 illustrates the case where the display 15 is provided to the coherent lidar 1, the coherent lidar 1 may not be provided with the display 15 and may use a separate display.

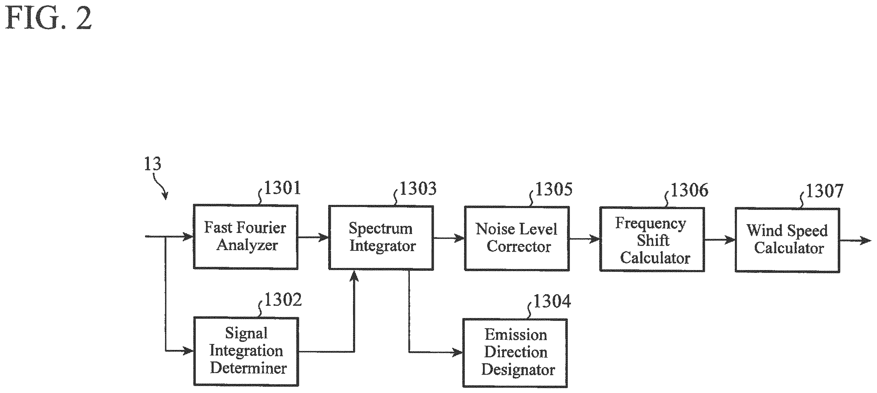

Next, a functional configuration example of the signal processor 13 is described with reference to FIG. 2.

As illustrated in FIG. 2, the signal processor 13 includes a fast Fourier analyzer 1301, a signal integration determiner 1302, a spectrum integrator 1303, an emission direction designator 1304, a noise level corrector 1305, a frequency shift calculator 1306, and a wind speed calculator 1307.

The fast Fourier analyzer 1301 obtains a received spectrum for each of time gates by performing fast Fourier transform on the received signal converted into a digital signal by the A/D converter 12 for each of the predetermined time gates. Data indicating the received spectrum for each of the time gates obtained by the fast Fourier analyzer 1301 is output to the spectrum integrator 1303.

The signal integration determiner 1302 determines whether integration of the received spectrum obtained by the fast Fourier analyzer 1301 is required for each of the time gates. In the configuration illustrated in FIG. 2, the signal integration determiner 1302 divides the received signal converted into a digital signal by the A/D converter 12 for each of the time gates and determines whether the amplitude of the received signal for each of the time gates exceeds an amplitude threshold value.

The amplitude threshold value is set for each of received signals divided for each of the time gates. Then the signal integration determiner 1302 sets a flag on a received signal that exceeds the amplitude threshold value, and generates for each of the time gates an integration determination signal that indicates whether or not integration of a corresponding received spectrum is necessary.

That is, in a case where the amplitude of a received signal exceeds the amplitude threshold value, a corresponding received spectrum is determined as not required to be integrated, and in a case where the amplitude of a received signal does not exceed the amplitude threshold value, a corresponding received spectrum is determined to be required to be integrated. The integration determination signal generated by the signal integration determiner 1302 is output to the spectrum integrator 1303.

The spectrum integrator 1303 integrates received spectra obtained by the fast Fourier analyzer 1301 in accordance with the integration determination signals generated by the signal integration determiner 1302.

Furthermore, the spectrum integrator 1303 determines whether the number of times of integration of received spectra has reached a reference number of times of integration in the same emission direction. Then, when determining that the number of times of integration has reached the reference number of times of integration, the spectrum integrator 1303 outputs a trigger signal to the emission direction designator 1304. On the other hand, when determining that the number of times of integration has not reached the reference number of times of integration, the spectrum integrator 1303 repeats integration of the received spectra. The reference number of times of integration is preset.

The spectrum integrator 1303 further determines whether the reception SNR of a received spectrum after the integration is lower than a reference value for the reception SNR. Then, when determining that the reception SNR is lower than the reference value for the reception SNR, the spectrum integrator 1303 stores the received spectrum in the memory 26 and integrates the received spectrum with the received spectra for the same emission direction previously acquired and stored in the memory 26.

On the other hand, when determining that the reception SNR does not fall below the reference value for the reception SNR, neither of storing of the received spectrum in the memory 26 and integrating the received spectrum with the received spectra for the same emission direction previously acquired is executed. The reference value for the reception SNR is preset.

Data indicating the received spectrum integrated by the spectrum integrator 1303 is output to the noise level corrector 1305.

The emission direction designator 1304 designates a next emission direction of the laser light in response to the trigger signal output from the spectrum integrator 1303. Then, the emission direction designator 1304 generates a control signal indicating the designated emission direction and outputs the control signal to the optical switch driver 14.

The noise level corrector 1305 eliminates noise by subtracting a noise spectrum from the received spectrum integrated by the spectrum integrator 1303. The noise level corrector 1305 has saved a received spectrum integrated by the spectrum integrator 1303 as the noise spectrum in the memory 26 in advance (in a noise acquisition mode) without emitting laser light into the atmosphere. Data indicating the received spectrum from which noise is removed by the noise level corrector 1305 is output to the frequency shift calculator 1306.

The frequency shift calculator 1306 calculates an amount of frequency shift from the frequency of the laser light emitted by the optical transceiver 11 by using the received spectrum from which noise is removed by the noise level corrector 1305. Data indicating the amount of frequency shift calculated by the frequency shift calculator 1306 is output to the wind speed calculator 1307.

The wind speed calculator 1307 calculates the wind speed in a line-of-sight (LOS) direction, which is the emission direction of the laser light emitted by the optical transceiver 11, from the amount of frequency shift calculated by the frequency shift calculator 1306. Moreover, the wind speed calculator 1307 performs vector calculation of the wind direction and wind speed in the horizontal direction, from the calculated wind speeds in plural LOS directions. Data indicating the calculation result by the wind speed calculator 1307 is output to the display 15 as data indicating a measurement result by the signal processor 13.

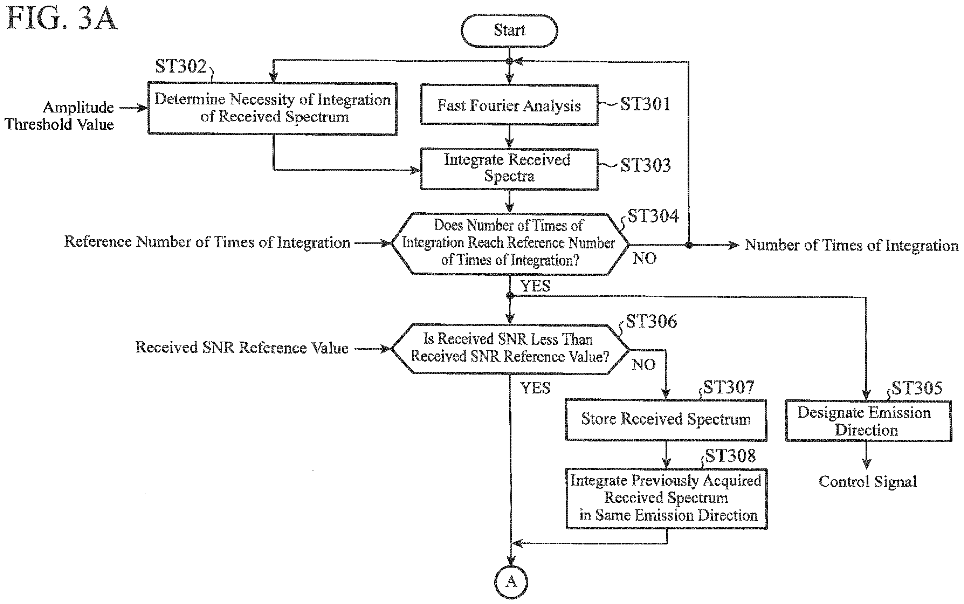

Next, an operation example of the signal processor 13 in the First Embodiment is described with reference to FIGS. 3A, 3B, and 4 to 6.

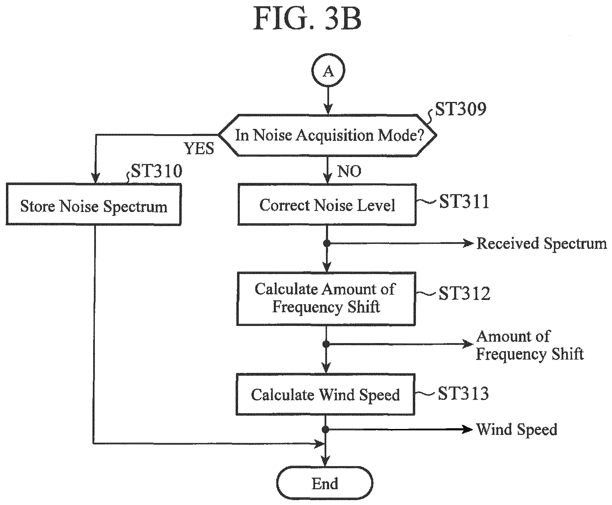

In the operation example of the signal processor 13 in the First Embodiment, as illustrated in FIGS. 3A and 3B, first, the fast Fourier analyzer 1301 performs fast Fourier transform on a received signal converted into a digital signal by the A/D converter 12 for each of the predetermined time gates (step ST301). As a result, a received spectrum for each of the time gates can be obtained.

Furthermore, the signal integration determiner 1302 determines the necessity of integration of a received spectrum obtained by the fast Fourier analyzer 1301 for each of the time gates by comparing the amplitude of the received signal converted into a digital signal by the A/D converter 12 for each of the time gates with the amplitude threshold value (step ST302).

At this time, the signal integration determiner 1302 divides the received signal converted into a digital signal by the A/D converter 12 for each of the time gates and determines whether the amplitude of the received signal for each of the time gates exceeds the amplitude threshold value. Then the signal integration determiner 1302 sets a flag on a received signal that exceeds the amplitude threshold value, and generates an integration determination signal that indicates whether or not integration of a corresponding received spectrum is necessary.

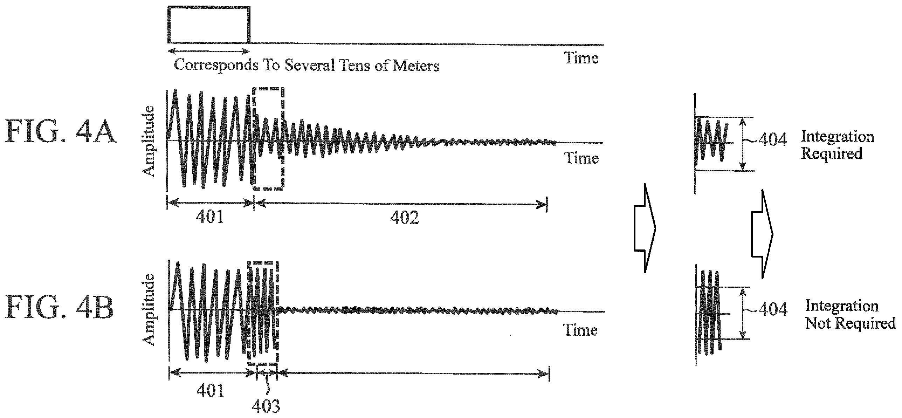

FIGS. 4A and 4B are diagrams for explaining the operation of the signal integration determiner 1302. Here, a waveform in the upper section of FIGS. 4A and 4B are time waveforms of laser light emitted by the optical transceiver 11, and illustrates the case where a transmission pulse of several tens of milliseconds is emitted into the atmosphere as laser light. Furthermore, a waveform on the left side of FIG. 4A is a time waveform of a received signal in a case where the laser light is emitted into the atmosphere without being blocked. Symbol 401 denotes a received signal attributable to internally reflected light in the coherent lidar 1, and symbol 402 denotes a received signal attributable to scattered light from aerosol.

Furthermore, a waveform on the left side of FIG. 4B is a time waveform of a received signal in a case where the laser light is blocked immediately after emission. Symbol 403 denotes a received signal attributable to reflected light from a hard target. Furthermore, a period enclosed by a broken line in the figure represents a time gate subjected to determination whether integration is necessary, and symbol 404 represents the amplitude threshold value for the received signal of the time gate.

Here, in a case where a received signal in a time gate which is the period enclosed by the broken line is extracted, the amplitude of the received signal does not exceed the amplitude threshold value in FIG. 4A, while in FIG. 4B the amplitude of the received signal exceeds the amplitude threshold value. Thereafter in the signal integration determiner 1302, for example, when the amplitude threshold value is exceeded, an integration determination signal is set to 0 (not integrated), and when the amplitude threshold value is not exceeded, an integration determination signal is set to 1 (integration required).

The amplitude threshold value is set for a received signal divided for each time gate as described above. This amplitude threshold value is set externally, and the value is determined by taking into consideration a reflectance of a hard target that blocks laser light.

For example, a case is assumed where a part of laser light is blocked by the hard target and the rest is emitted into the atmosphere behind the hard target. In this case, scattered light from aerosol can be received by the optical antennas 22. However, since a part of the light is blocked by the hard target, whether the reception SNR of a received spectrum integrated by the spectrum integrator 1303 is improved or deteriorated is determined depending on the ratio of the light blocked.

Accordingly, the amplitude threshold value is set with the level of the received signal attributable to the reflected light from the hard target obtained when the level of the received signal attributable to the scattered light from the aerosol is the level of device noise is set as the amplitude threshold value. The device noise includes thermal noise of the optical receiver 24, amplified spontaneous emission noise generated in the optical amplifier 19, and other noise.

Subsequently, the spectrum integrator 1303 integrates the received spectra obtained by the fast Fourier analyzer 1301 in accordance with the integration determination signal generated by the signal integration determiner 1302 (step ST303). That is, the spectrum integrator 1303 controls whether to integrate a received spectrum for each time gate on the basis of the integration determination signal. In the above example, when the integration determination signal is 1 (integration required), a corresponding received spectrum is integrated. If the integration determination signal is 0 (not integrated), a corresponding received spectrum is not integrated.

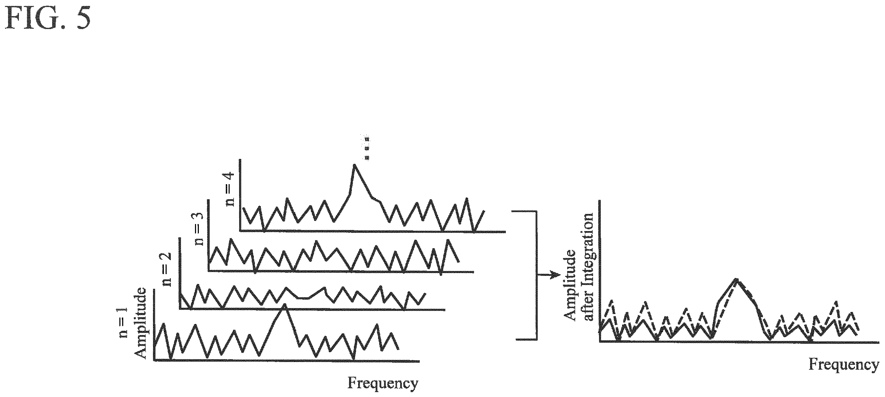

FIG. 5 is a diagram for explaining the operation of the spectrum integrator 1303. FIG. 5 includes graphs each illustrating a received spectrum for each time gate and a graph illustrating a received spectrum after integration in a case where laser light is blocked in periods corresponding to the second and the third (n = 2, 3) received spectra obtained by the fast Fourier analyzer 1301. Furthermore regarding the received spectrum after the integration, a broken line illustrates the case of a conventional coherent lidar (corresponds to FIG. 16B), and a solid line illustrates the case of the coherent lidar 1 of the First Embodiment.

In this case, in the spectrum integrator 1303 of the First Embodiment, the second and the third received spectra corresponding to the periods during which scattered light from the aerosol is not received are not integrated. As a result, regarding the received spectrum after the integration in FIG. 5, compared to the conventional coherent lidar illustrated by the broken line, the amplitude of the signal spectrum in the coherent lidar 1 of the First Embodiment is equivalent while reducing the amplitudes of the noise spectrum. That is, it can be understood that the coherent lidar 1 of the First Embodiment has an improved reception SNR.

Furthermore, the spectrum integrator 1303 determines whether the number of times of integration of received spectra reaches a reference number of times of integration in the same emission direction (step ST304). In step ST304, if the spectrum integrator 1303 determines that the number of times of integration of received spectra does not reach the reference number of times of integration, the sequence returns to step ST301.

On the other hand, if it is determined in step ST304 that the number of times of integration of received spectra reaches the reference number of times of integration, the spectrum integrator 1303 outputs a trigger signal to the emission direction designator 1304. In response to the trigger signal, the emission direction designator 1304 designates a next emission direction of the laser light and outputs a control signal indicating the emission direction to the optical switch driver 14 (step ST305). Then, in accordance with this control signal, the optical switch driver 14 causes the optical switch 21 to switch the emission direction of the laser light to the emission direction designated by the control signal. This allows for transition to wind speed measurement in the next emission direction (LOS direction).

Next, the spectrum integrator 1303 determines whether the reception SNR of the received spectrum after the integration is lower than the reference value for the reception SNR (step ST306).

In step ST306, if it is determined that the received SNR of the received spectrum obtained by the integration is lower than the reference value for the reception SNR, the spectrum integrator 1303 stores the received spectrum in the memory 26 and integrates the stored received spectrum with a received spectrum in the same emission direction that is previously acquired and stored in the memory 26 (steps ST307 and ST308). Thus a received spectrum stored in the memory 26 is used next time in a case where a reception SNR of the received spectrum obtained after integration is lower than the reference value for the reception SNR in integration processing in the same emission direction.

On the other hand, in step ST306, if the spectrum integrator 1303 determines that the reception SNR of the received spectrum after the integration is equal to or higher than the reference value for the reception SNR, the processing in steps ST307 and ST308 is skipped.

Next, the noise level corrector 1305 determines whether the coherent lidar 1 is in the noise acquisition mode (step ST309).

In step ST309, if it is determined that the coherent lidar 1 is in the noise acquisition mode, the noise level corrector 1305 stores the received spectrum integrated by the spectrum integrator 1303 in a state where no laser light is emitted into the atmosphere as a noise spectrum in the memory 26 (step ST310). That is, in the noise level corrector 1305, the shape of a received spectrum distorted due to device noise such as thermal noise of the optical receiver 24 and amplified spontaneous emission noise generated in the optical amplifier 19 is acquired in advance as a noise spectrum.

On the other hand, in step ST309, if the noise level corrector 1305 determines that the coherent lidar 1 is not in the noise acquisition mode, the noise level corrector 1305 removes noise by subtracting the noise spectrum from the received spectrum integrated by the spectrum integrator 1303 (step ST311). That is, when the coherent lidar 1 is in a wind speed measurement mode, the noise spectrum stored in the memory 26 is subtracted from the received spectrum to correct the baseline to a certain level.

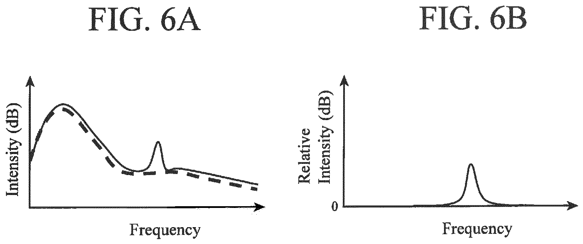

FIGS. 6A and 6B are diagrams for explaining the operation of the noise level corrector 1305.

As illustrated in FIG. 6A, the received spectrum integrated by the spectrum integrator 1303 is a sum of a signal spectrum and a noise spectrum. In FIG. 6A, a solid line illustrates the received spectrum (signal spectrum + noise spectrum) and a broken line illustrates the noise spectrum.

Here, since laser light of a single frequency is used, the signal spectrum appears only in a specific frequency range. On the other hand, the noise spectrum has frequency characteristics such as thermal noise of the optical receiver 24 and amplified spontaneous emission noise generated in the optical amplifier 19, and other noise. Therefore, by obtaining the spectrum including only the noise, that is, the noise spectrum in advance and subtracting the noise spectrum from the received spectrum integrated by the spectrum integrator 1303, it is possible to correct into the shape of an accurate signal spectrum as illustrated in FIG. 6B.

Next, the frequency shift calculator 1306 calculates an amount of frequency shift from the laser light emitted by the optical transceiver 11 by using the received spectrum from which the noise is removed by the noise level corrector 1305 (step ST312). At this time, the frequency shift calculator 1306 determines a peak frequency by performing peak detection on the received spectrum from which the noise is removed by the noise level corrector 1305 and calculates the amount of shift deviating from the frequency of the laser light emitted by the optical transceiver 11.

Next, the wind speed calculator 1307 calculates the wind speed in the LOS direction from the amount of frequency shift calculated by the frequency shift calculator 1306 (step ST313). The wind speed calculator 1307 also performs vector calculation of the wind direction and wind speed in the horizontal direction from the calculated wind speeds in plural emission directions. Data indicating the calculation result obtained by the wind speed calculator 1307 is output to and displayed on the display 15 as data indicating a measurement result obtained by the signal processor 13.

In the above, the case is described where the signal integration determiner 1302 determines the necessity of integration of received spectra obtained by the fast Fourier analyzer 1301 for each of the time gates by comparing the amplitude of the received signal from the A/D converter 12 for each of the time gates with the amplitude threshold value (step ST302). However, the operation example of the signal integration determiner 1302 is not limited to the above.

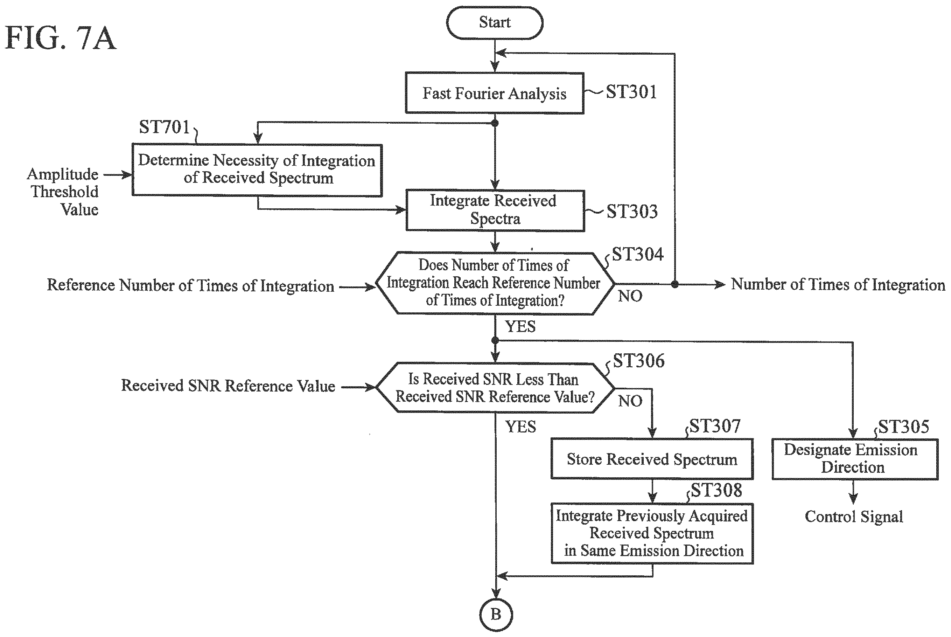

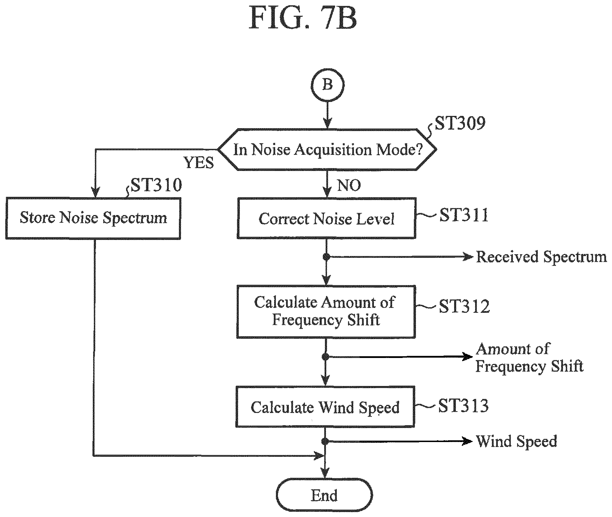

For example, as illustrated in FIGS. 7A and 7B, the signal integration determiner 1302 may compare the amplitude of a received spectrum for each of time gates obtained by the fast Fourier analyzer 1301 with an amplitude threshold value and thereby determine necessity of integration of the received spectrum for each of the time gates (step ST701).

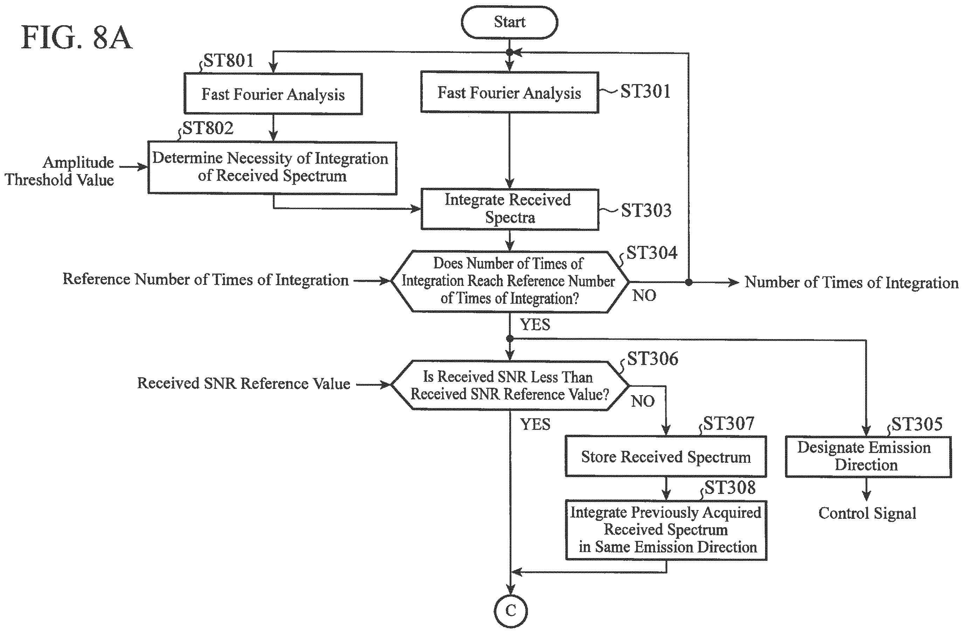

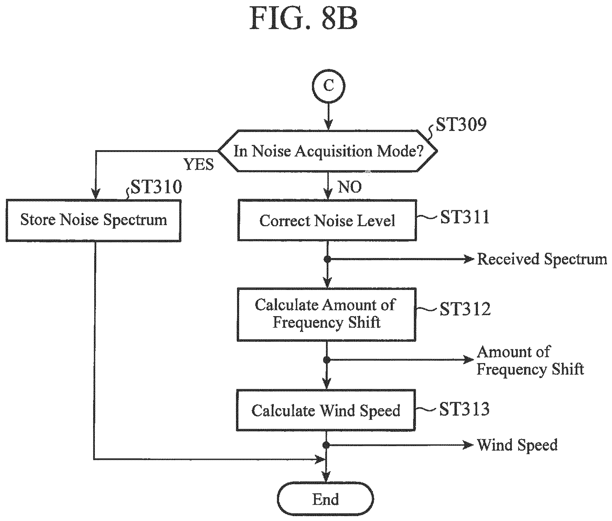

Alternatively, as illustrated in FIGS. 8A and 8B, the signal integration determiner 1302 first performs fast Fourier transform on the received signal from the A/D converter 12 for each of the time gates and obtains a received spectrum for each of the time gates (step ST801). Then, by comparing the amplitude of the obtained received spectrum for each of the time gates with the amplitude threshold value, necessity of integration of the received spectrum obtained by the fast Fourier analyzer 1301 may be determined for each of the time gates (step ST802).

Also for the amplitude threshold value in the case of FIGS. 7A, 7B, 8A, and 8B, similarly to the above, the amplitude threshold value is set with the level of a received signal attributable to reflected light from a hard target obtained when the level of a received signal attributable to scattered light from aerosol is the level of device noise.

Furthermore, in a case where the laser light is blocked immediately after emission, a received signal overlaps with a signal attributable to internal reflected light of the coherent lidar 1, and thus it is difficult to determine a light blocking state from an amplitude value of the received signal or a received spectrum thereof. However, by extracting a signal after a period during which the received signal overlaps the signal attributable to the internal reflected light for each of time gates, it is also possible to identify the light blocking state immediately after emission of the laser light.

Also, in the above description the case where the signal integration determiner 1302 generates the integration determination signal by using the amplitude threshold value is described. However, without being limited thereto, the signal integration determiner 1302 may determine necessity of integration of the received spectrum obtained by the fast Fourier analyzer 1301 for each of the time gates on the basis of the external signal indicating a timing at which the laser light emitted by the optical transceiver 11 is blocked and generate the integration determination signal.

For example, in a case where the coherent lidar 1 is mounted on a nacelle 201 of a wind power generator 2, the integration determination signal may be generated using an external signal such as encoder data indicating the position of blades 202, data of a sensor or other devices to detect the position of the blades 202 such as a laser sensor or a camera provided additionally.

Next, a case where the coherent lidar 1 is mounted on the nacelle 201 of the wind power generator 2 and laser light is blocked by a blade 202 is described as an example where the laser light is blocked.

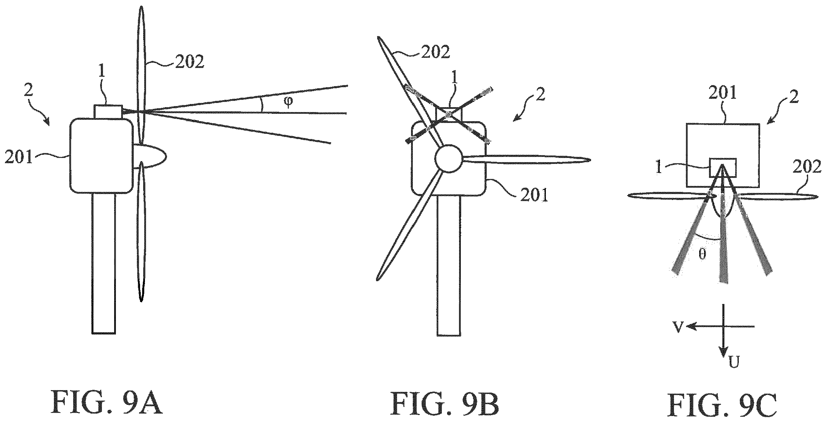

FIGS. 9A to 9C are diagrams illustrating a case where the coherent lidar 1 is mounted on the nacelle 201.

As illustrated in FIGS. 9A to 9C, the coherent lidar 1 is installed behind the blades 202 and measures the wind flowing through the blades 202. In this case, there is a period during which a blade 202 blocks the laser light emitted from the coherent lidar 1 during wind power generation by the wind power generator 2, that is, when the blade 202 is rotating.

For example, it is assumed that the rotation speed of the blades 202 is 6 rpm, the width of the blade 202 is 4 m, and the height at which the coherent lidar 1 is installed is 5 m apart from the rotation center of the blades 202. In this case, time required for the blades 202 to make one revolution is 10 s, and time during which the laser light is blocked by the blades 202 is approximately 1.28 s × the number of the blades 202. Generally, the number of the blades 202 is three, and thus time during which the laser light is blocked while the blades 202 make one revolution is 1.28 s × 3.

Meanwhile, a repetition frequency of the laser light by the coherent lidar 1 is set to 1 kHz, and the number of times of integration of a received spectrum is set to 5000 times. In this case, time required for integrating a received spectrum 5000 times amounts to 5 s. During this measurement time, there are three patterns of received signals obtained by the coherent lidar 1. Those are:

    (1) a received signal attributable only to scattered light from aerosol;
    (2) a received signal attributable to scattered light from aerosol and reflected light from the blades 202; and
    (3) a received signal attributable only to reflected light from the blades 202.

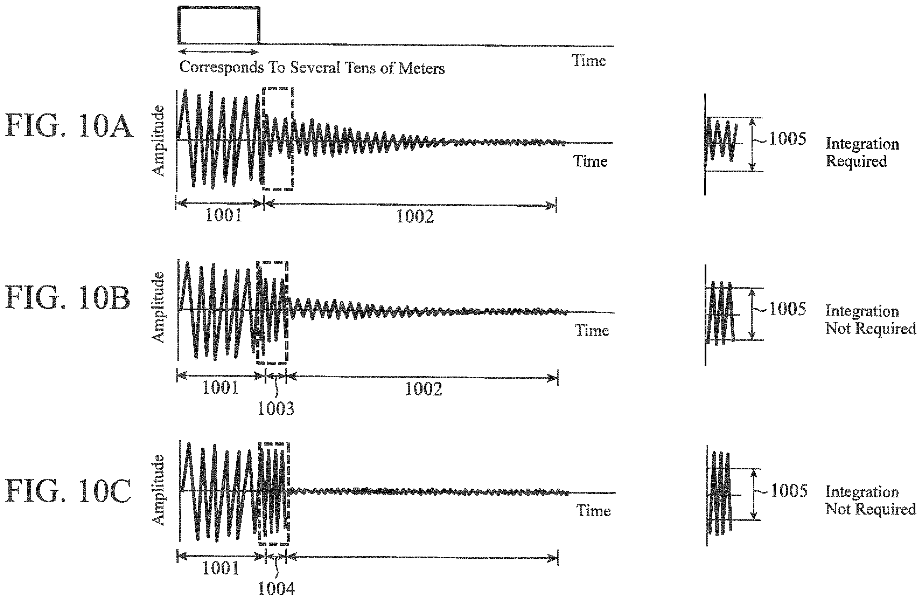

FIGS. 10A to 10C are diagrams for explaining the operation of the signal integration determiner 1302 in the configuration illustrated in FIGS. 9A to 9C. Here, a waveform in the upper section of FIGS. 10A to 10C is a time waveform of laser light emitted by the optical transceiver 11, which illustrates the case where transmission pulses having lengths equivalent to several tens of milliseconds are emitted into the atmosphere as laser light.

Furthermore, a waveform on the left side of FIG. 10A is a time waveform of a received signal in the case of (1) described above. Symbol 1001 denotes a received signal attributable to internally reflected light in the coherent lidar 1, and symbol 1002 denotes a received signal attributable to scattered light from aerosol. Furthermore, a waveform on the left side of FIG. 10B is a time waveform of a received signal in the case of (2) described above. Symbol 1003 denotes a received signal attributable to both scattered light from aerosol and reflected light from the blades 202.

Furthermore, a waveform on the left side of FIG. 10C is a time waveform of a received signal in the case of (3) described above. Symbol 1004 denotes a received signal attributable to reflected light from the blades 202. Furthermore, a period enclosed by a broken line in the figure represents a time gate subjected to determination whether integration is necessary, and symbol 1005 represents the amplitude threshold value for the received signal of the time gate.

Here, received signals in FIGS. 10A and 10C are the same as the received signals in FIGS. 4A and 4B, and thus descriptions thereof are omitted. On the other hand, a received signal in FIG. 10B represents a case where a part of the laser light emitted from the coherent lidar 1 is blocked by the blade 202 and the rest is emitted into the atmosphere behind the blade 202. As to the received signal illustrated in FIG. 10B, for example, the signal integration determiner 1302 sets the integration determination signal to 0 (not integrated) in a case where the amplitude of the received signal extracted for each time gate exceeds the amplitude threshold value, and sets the integration determination signal to 1 (integrating required) in a case of not exceeding the amplitude threshold value. Then, the spectrum integrator 1303 operates so as not to integrate a received spectrum that deteriorates the reception SNR in accordance with the integration determination signal.

Furthermore, suppose that a required number of times of integration of received spectra in order to obtain a reception SNR for ensuring the measurement accuracy of the wind speed is 5000 times. In this case, a conventional coherent lidar requires 5 s of continuous measurement time. However, when there is a period during which the laser light is blocked by a hard target such as the blades 202 during measurement, the reception SNR is deteriorated.

Therefore, in order to obtain an intended reception SNR in consideration of the period during which the laser light is blocked, it is necessary to improve the reception SNR deteriorated as described above by further integrating the received spectrum, and thus more measurement time is required (it takes longer than measurement time of 7.56 s of the present invention described later).

On the other hand, in the coherent lidar 1 according to the First Embodiment, in a case where there is a period during which the laser light is blocked by a hard target such as the blades 202, a received spectrum corresponding to this period is not integrated. As a result, at the shortest in the above example, in measurement time of 7.56 s, which is the sum of a net period of 5 s during which the laser light is not blocked and a period of 1.28 s $\times$ 2 during which the laser light is blocked by two of the blades 202 during this period, an intended reception SNR can be obtained. As a result, it is possible to obtain an intended reception SNR in a short measurement time, compared with the conventional configuration.

Furthermore, in the coherent lidar 1 according to the First Embodiment, the time resolution of a measurement of the wind speed is improved compared with a conventional coherent lidar. Moreover, a high reception SNR can be obtained also in a case where measurement time is limited, and thus a high measurement accuracy of the wind speed can be obtained, and a high data acquisition rate can be obtained. The data acquisition rate refers to the number of pieces of data that exceeds a required reception SNR over the number of pieces of data of received spectra acquired during the measurement time.

As described above, since the received spectrum corresponding to the period during which the laser light is blocked is not integrated according to the First Embodiment, even in a case where there is a period during which the laser light is blocked, deterioration of the reception SNR can be prevented. As a result, it is possible to obtain the reception SNR necessary for the required measurement accuracy of the wind speed in a short time compared with the conventional configuration.

In the above description, the case where an emission direction of the laser light is switched using the optical switch 21 is illustrated. However, this is not a limiting configuration. The optical switch 21 may not be used, and laser light output from the optical circulator 20 may be emitted into the atmosphere by a single optical antenna 22. In this case, the optical switch driver 14 and the emission direction designator 1304 are also unnecessary.

Second Embodiment

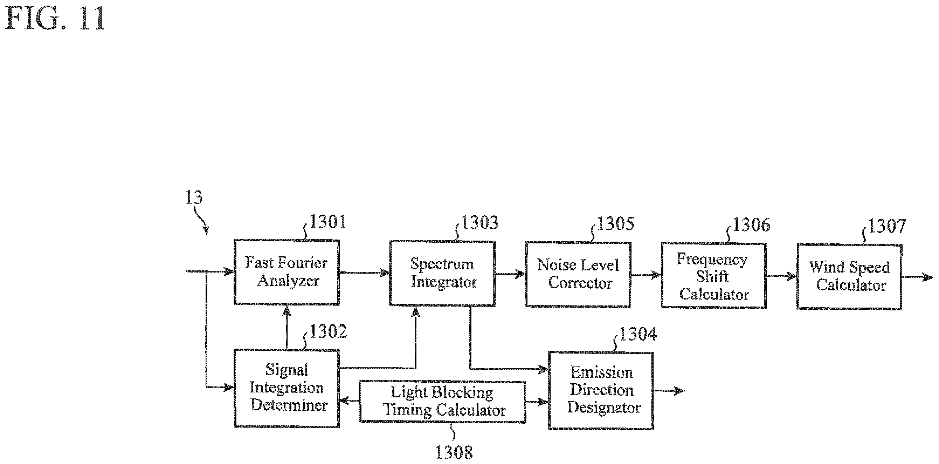

FIG. 11 is a block diagram illustrating a functional configuration example of a signal processor 13 according to the Second Embodiment of this invention. The signal processor 13 in the Second Embodiment illustrated in FIG. 11 is obtained by adding a light blocking timing calculator 1308 to the signal processor 13 in the First Embodiment illustrated in FIG. 2. Other elements are similar and thus denoted with the same symbols while only different points are described.

A signal integration determiner 1302 in the Second Embodiment has a function of outputting a generated integration determination signal also to the light blocking timing calculator 1308 in addition to the functions of the First Embodiment.

The light blocking timing calculator 1308 calculates a timing at which laser light emitted by an optical transceiver 11 is blocked. In the configuration illustrated in FIG. 11, the light blocking timing calculator 1308 calculates a timing at which the laser light emitted by the optical transceiver 11 is blocked from the integration determination signal generated by the signal integration determiner 1302. The light blocking timing calculator 1308 calculates, for example, a period at which the laser light is blocked or a duration during which the laser light is blocked as the above timing. Data indicating the timing calculated by the light blocking timing calculator 1308 is output to an emission direction designator 1304.

The emission direction designator 1304 in the Second Embodiment has a function of designating an emission direction in which the laser light is not blocked at the timing calculated by the light blocking timing calculator 1308 in addition to the functions of the First Embodiment. Then, the emission direction designator 1304 generates a control signal indicating the timing calculated by the light blocking timing calculator 1308 and the emission direction the emission direction designator 1304 has designated and outputs the control signal to an optical switch driver 14.

The optical switch driver 14 of Second Embodiment has a function of causing an optical switch 21 to switch an emission direction of the laser light to the emission direction described above at the above timing when receiving the control signal indicating the timing at which the laser light is blocked and the emission direction in which the laser light is not blocked at that time in addition to the functions of the First Embodiment.

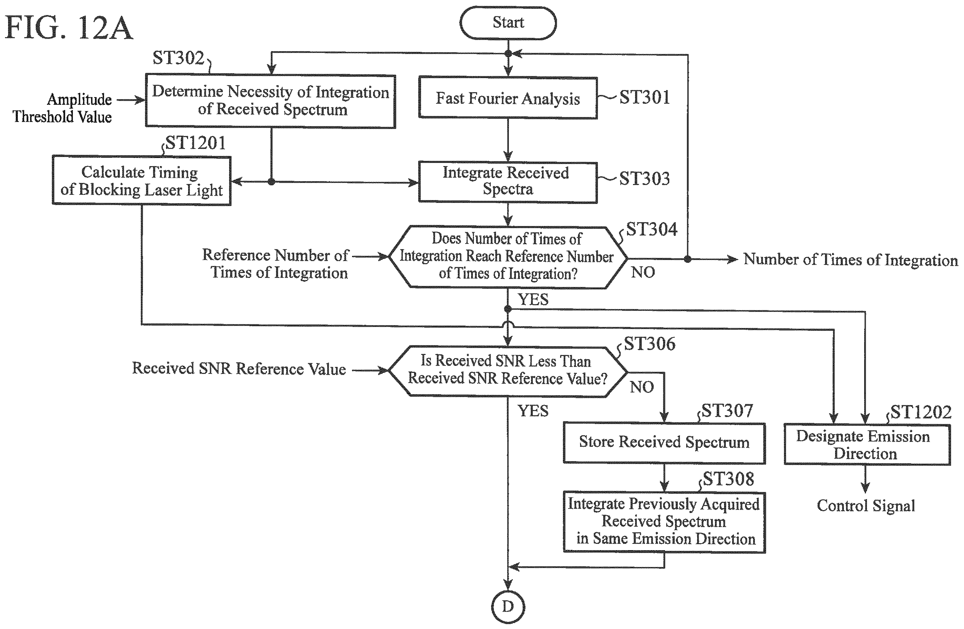

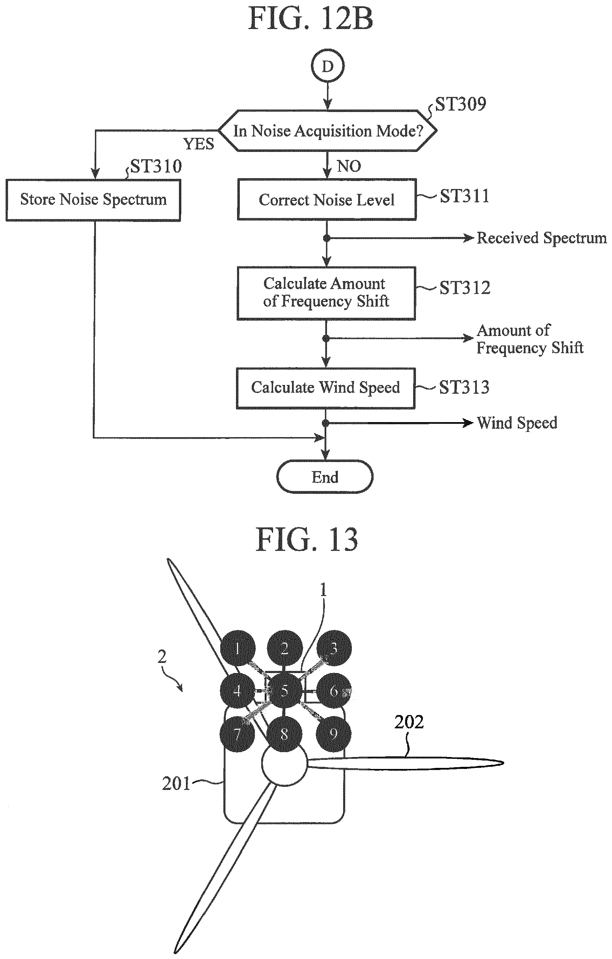

Next, an operation example of the signal processor 13 in the Second Embodiment is described. In the operation example of the signal processor 13 in the Second Embodiment illustrated in FIGS. 12A and 12B, step ST1201 is added to the operation example of the signal processor 13 in the First Embodiment illustrated in FIGS. 3A and 3B with step ST305 replaced with step ST1202. Other operations are similar, and thus descriptions thereof are omitted.

In the operation example of the signal processor 13 in the Second Embodiment, in step ST1201, the light blocking timing calculator 1308 calculates a timing at which the laser light emitted by the optical transceiver 11 is blocked from the integration determination signal generated by the signal integration determiner 1302. That is, the light blocking timing calculator 1308 sequentially stores the integration determination signal generated by the signal integration determiner 1302 in the memory 26.

Thereafter, the timing at which the laser light emitted by the optical transceiver 11 is blocked is calculated from the stored time-series data of the integration determination signal. At this time, the light blocking timing calculator 1308 calculates, for example, a cycle or a period of time when the laser light is blocked as the timing at which the laser light is blocked.

Next, the emission direction designator 1304 designates an emission direction in which the laser light is not blocked at the timing calculated by the light blocking timing calculator 1308 and outputs a control signal indicating the timing and the emission direction to the optical switch driver 14 (step ST1202).

That is, the emission direction designator 1304 predicts a timing at which the laser light is not blocked by a hard target from the timing at which the laser light is blocked. Then an emission direction in which the laser light is not blocked by the hard target is calculated with respect to an emission direction of the laser light determined by an installation angle of the optical switch 21 and optical antennas 22.

Then, in accordance with this control signal from the emission direction designator 1304, the optical switch driver 14 causes the optical switch 21 to switch the emission direction of the laser light to the emission direction designated by the control signal at the timing indicated by the control signal. This allows for preventing the laser light from being blocked by the hard target.

In the above description, the case where step ST1201 is added to the operation example of the signal processor 13 illustrated in FIGS. 3A and 3B with step ST305 replaced with step ST1202 is illustrated. However, this is not a limiting configuration. For example, to the operation example of the signal processor 13 illustrated in FIGS. 7A, 7B, 8A, and 8B, step ST1201 may be added and step ST305 may be replaced with step ST1202.

In the above description, the case where the light blocking timing calculator 1308 calculates the timing at which the laser light is blocked by using the integration determination signal from the signal integration determiner 1302 is described. However, the present invention is not limited to this, and the light blocking timing calculator 1308 may calculate the timing at which the laser light is blocked using an external signal.

For example, in a case where the coherent lidar 1 is mounted on the nacelle 201 of the wind power generator 2, a timing at which the laser light is blocked may be calculated using an external signal such as encoder data indicating the position of the blades 202, data of a sensor or other devices to detect the position of the blades 202 such as a laser sensor or a camera provided additionally.

Next, a case where the coherent lidar 1 is mounted on the nacelle 201 of the wind power generator 2 and laser light is blocked by a blade 202 is described as an example where the laser light is blocked.

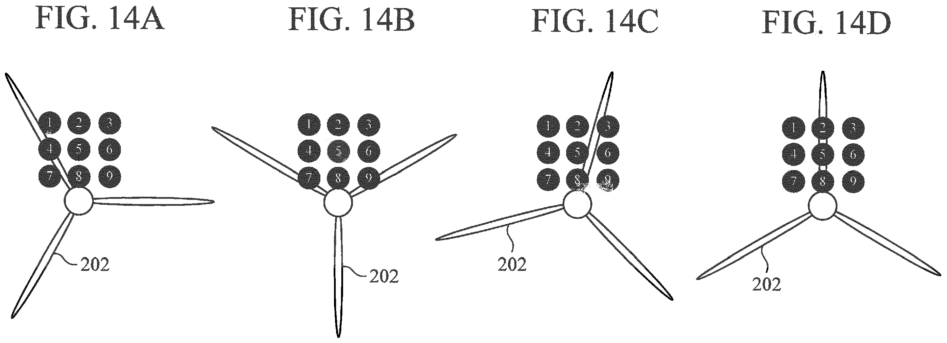

FIG. 13 is a diagram illustrating an example of a laser light emission pattern in the case where the coherent lidar 1 is mounted on the nacelle 201. Moreover, FIG. 14 includes diagrams each illustrating an example of laser light blocked at each time when the blades 202 are rotating. In the figure, a circle indicates an emission direction of the laser light, and a number in a circle indicates an order of emission.

This coherent lidar 1 is installed behind the blades 202 like in the case of the First Embodiment and measures the wind flowing through the blades 202. In this case, as illustrated in FIGS. 13 and 14, there is an emission direction in which the laser light emitted from the coherent lidar 1 is blocked by a blade 202 during wind power generation by the wind power generator 2, that is, when the blades 202 are rotating.

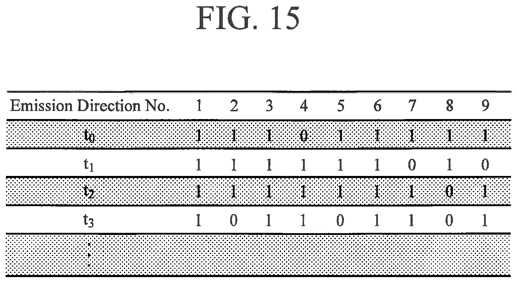

An example of changes over time of the integration determination signal in the configuration illustrated in FIG. 13 is illustrated in FIG. 15. In FIG. 15, it is assumed that, in a case where a received spectrum is not to be integrated, the integration determination signal is 0, and in a case where a received spectrum requires integration, the integration determination signal is 1.

Here, in a conventional coherent lidar, it is assumed that an emission direction of the laser light is No. 7 at time t0 and t1, and an emission direction of the laser light is No. 8 at time t2 and t3. In this case, as illustrated in FIGS. 14A to 14D and 15, the emission direction of No. 7 is blocked at time t1, and the emission direction of No. 8 is blocked at time t2 and t3.

On the other hand, in the coherent lidar 1 according to the Second Embodiment, for example, the emission direction of the laser light is changed to No. 8 at time t0 and t1, and the emission direction of the laser light is changed to No. 7 at time t2 and t3 on the basis of the timings at which the laser light is blocked calculated by the light blocking timing calculator 1308. As a result, it is possible to eliminate a loss of measurement time due to light blocking and to measure efficiently the wind speeds in plural LOS directions.

As described above, the timing at which the laser light is blocked is calculated, and the laser light is switched to the emission direction in which the laser light is not blocked at this timing according to the Second Embodiment. Therefore, it is possible to measure efficiently wind speeds in plural LOS directions in addition to the effects in the First Embodiment.

In the First and Second Embodiments, the case where the noise level corrector 1305 is included in the signal processor 13 is described; however, the present invention is not limited thereto, and the noise level corrector 1305 may not be included.

The present invention may include a flexible combination of the respective embodiments, a modification of any component of the respective embodiments, or an omission of any component in the respective embodiments within the scope of the present invention.

Industrial Applicability

A coherent lidar according to this invention is suitable for use as a coherent lidar or other devices capable of preventing deterioration of the reception SNR and measuring the wind speed in the atmosphere even in a case where there is a period during which laser light is blocked.

List of Reference Signs

1       Coherent lidar
2       Wind power generator
11      Optical transceiver
12      A/D converter
13      Signal processor
14      Optical switch driver
15      Display
16      Reference light source (light source)
17      Optical distributor
18      Pulse modulator
19      Optical amplifier
20      Optical circulator
21      Optical switch
22      Optical antenna
23      Optical coupler
24      Optical receiver
25      CPU
26      Memory
201     Nacelle

| | |
|---|---|
| 202 | Blade |
| 1301 | Fast Fourier analyzer |
| 1302 | Signal integration determiner |
| 1303 | Spectrum integrator |
| 1304 | Emission direction designator |
| 1305 | Noise level corrector |
| 1306 | Frequency shift calculator |
| 1307 | Wind speed calculator |
| 1308 | Light blocking timing calculator |

**Claims**

1. A coherent lidar, comprising:

   - an optical transceiver adapted to obtain a received signal by emitting laser light of a single frequency into an atmosphere, receiving scattered light from the atmosphere, and performing heterodyne detection;
   - an A/D converter adapted to convert the received signal obtained by the optical transceiver into a digital signal;
   - a fast Fourier analyzer adapted to obtain a received spectrum for each of time gates by performing fast Fourier transform on the received signal converted into the digital signal by the A/D converter for each of the time gates;
   - a signal integration determiner adapted to determine necessity of integration of each of the received spectra obtained by the fast Fourier analyzer for each time gate;
   - a spectrum integrator adapted to perform integration of the received spectra obtained by the fast Fourier analyzer depending on a determination result by the signal integration determiner;
   - a frequency shift calculator adapted to calculate an amount of a frequency shift with respect to the laser light emitted by the optical transceiver, from a received spectrum obtained by integration by the spectrum integrator; and
   - a wind speed calculator adapted to calculate a wind speed in a direction of emission of the laser light from the optical transceiver, from the amount of the frequency shift calculated by the frequency shift calculator.

2. The coherent lidar according to claim 1,
   wherein the signal integration determiner is adapted to determine the necessity of the integration of each of the received spectra obtained by the fast Fourier analyzer for each time gate, on the basis of an amplitude within each time gate of the received signal converted into the digital signal by the A/D converter.

3. The coherent lidar according to claim 1,
   wherein the signal integration determiner is adapted to determine the necessity of the integration of each of the received spectra for each time gate, on the basis of an amplitude for each time gate of the received spectra obtained by the fast Fourier analyzer.

4. The coherent lidar according to claim 1,
   wherein the signal integration determiner is adapted to determine the necessity of the integration of each of the received spectra obtained by the fast Fourier analyzer for each time gate, on the basis of an amplitude within each time gate of the received spectrum obtained by performing fast Fourier transform, for each of the time gates, on the received signal converted into the digital signal by the A/D converter.

5. The coherent lidar according to claim 1,
   wherein the signal integration determiner is adapted to determine the necessity of the integration of each of the received spectra obtained by the fast Fourier analyzer for each time gate, on the basis of an external signal indicating a timing at which the laser light emitted by the optical transceiver is blocked.

6. The coherent lidar according to claim 1,
   wherein the optical transceiver includes an optical switch for switching an emission direction of the laser light, the coherent lidar further comprising:

   - a light blocking timing calculator adapted to calculate a timing at which the laser light emitted by the optical transceiver is blocked;
   - an emission direction designator adapted to designate an emission direction in which the laser light is not blocked at the timing calculated by the light blocking timing calculator; and
- an optical switch driver adapted to cause the optical switch to switch an emission direction of the laser light to the emission direction designated by the emission direction designator at the timing calculated by the light blocking timing calculator.

7. The coherent lidar according to claim 1,
wherein the optical transceiver comprises:

- a light source adapted to emit laser light that is a continuous wave of a single frequency;
- an optical distributor adapted to split the laser light emitted by the light source;
- a pulse modulator adapted to perform pulse intensity modulation and frequency shift on one laser light obtained by splitting performed by the optical distributor;
- an optical amplifier adapted to amplify the laser light performed with the pulse intensity modulation and the frequency shift by the pulse modulator;
- an optical antenna to adapted emit the laser light amplified by the optical amplifier into the atmosphere and receiving scattered light from the atmosphere;
- an optical coupler adapted to mix and to split the other laser light obtained by splitting performed by the optical distributor and the scattered light received by the optical antenna; and
- an optical receiver adapted to obtain the received signal by performing heterodyne detection on light obtained by mixing and splitting performed by the optical coupler.

# FIG. 1

FIG. 2

13

1301 Fast Fourier Analyzer

1303 Spectrum Integrator

1305 Noise Level Corrector

1306 Frequency Shift Calculator

1307 Wind Speed Calculator

1302 Signal Integration Determiner

1304 Emission Direction Designator

# FIG. 3A

Start

ST302 — Determine Necessity of Integration of Received Spectrum

Amplitude Threshold Value →

Fast Fourier Analysis ~ST301

Integrate Received Spectra ~ST303

ST304 — Does Number of Times of Integration Reach Reference Number of Times of Integration?

Reference Number of Times of Integration →

NO → Number of Times of Integration

YES

ST306 — Is Received SNR Less Than Received SNR Reference Value?

Received SNR Reference Value →

NO

ST307 — Store Received Spectrum

ST305 — Designate Emission Direction

YES

ST308 — Integrate Previously Acquired Received Spectrum in Same Emission Direction

Control Signal

A

EP 3 410 155 A1

# FIG. 3B

Corresponds To Several Tens of Meters

Time

FIG. 4A

Amplitude

Time

401    402

404 Integration Required

FIG. 4B

Amplitude

Time

401    403

404 Integration Not Required

FIG. 5

FIG. 6A

Frequency

FIG. 6B

Frequency

# FIG. 7A

Start

Fast Fourier Analysis — ST301

ST701 — Determine Necessity of Integration of Received Spectrum

Amplitude Threshold Value →

Integrate Received Spectra — ST303

ST304 — Does Number of Times of Integration Reach Reference Number of Times of Integration?

Reference Number of Times of Integration →

NO → Number of Times of Integration

YES

ST306 — Is Received SNR Less Than Received SNR Reference Value?

Received SNR Reference Value →

NO

YES

ST307 — Store Received Spectrum

ST308 — Integrate Previously Acquired Received Spectrum in Same Emission Direction

ST305 — Designate Emission Direction

Control Signal

B

EP 3 410 155 A1

# FIG. 7B

B

In Noise Acquisition Mode? — ST309

YES

Store Noise Spectrum — ST310

NO

Correct Noise Level — ST311

→ Received Spectrum

Calculate Amount of Frequency Shift — ST312

→ Amount of Frequency Shift

Calculate Wind Speed — ST313

→ Wind Speed

End

FIG. 8A

Start

ST801
Fast Fourier Analysis

Fast Fourier Analysis — ST301

ST802
Amplitude Threshold Value → Determine Necessity of Integration of Received Spectrum

Integrate Received Spectra — ST303

ST304
Reference Number of Times of Integration → Does Number of Times of Integration Reach Reference Number of Times of Integration?

NO → Number of Times of Integration

YES

ST306
Received SNR Reference Value → Is Received SNR Less Than Received SNR Reference Value?

NO

YES

ST307
Store Received Spectrum

ST305
Designate Emission Direction

ST308
Integrate Previously Acquired Received Spectrum in Same Emission Direction

Control Signal

C

EP 3 410 155 A1

# FIG. 8B

C

ST309 In Noise Acquisition Mode?

YES

ST310 Store Noise Spectrum

NO

ST311 Correct Noise Level

→ Received Spectrum

ST312 Calculate Amount of Frequency Shift

→ Amount of Frequency Shift

ST313 Calculate Wind Speed

→ Wind Speed

End

FIG. 9A

FIG. 9B

FIG. 9C

EP 3 410 155 A1

FIG. 10A

FIG. 10B

FIG. 10C

FIG. 11

# FIG. 12A

ST302 — Determine Necessity of Integration of Received Spectrum

Amplitude Threshold Value →

ST1201 — Calculate Timing of Blocking Laser Light

Start

Fast Fourier Analysis ~ ST301

Integrate Received Spectra ~ ST303

ST304 — Does Number of Times of Integration Reach Reference Number of Times of Integration?

Reference Number of Times of Integration →

NO → Number of Times of Integration

YES

ST306 — Is Received SNR Less Than Received SNR Reference Value?

Received SNR Reference Value →

NO → ST307 — Store Received Spectrum → ST308 — Integrate Previously Acquired Received Spectrum in Same Emission Direction

ST1202 — Designate Emission Direction → Control Signal

YES

D

EP 3 410 155 A1

# FIG. 12B

# FIG. 13

FIG. 14A    FIG. 14B    FIG. 14C    FIG. 14D

# FIG. 15

| Emission Direction No. | 1 | 2 | 3 | 4 | 5 | 6 | 7 | 8 | 9 |
|---|---|---|---|---|---|---|---|---|---|
| $t_0$ | 1 | 1 | 1 | 0 | 1 | 1 | 1 | 1 | 1 |
| $t_1$ | 1 | 1 | 1 | 1 | 1 | 1 | 0 | 1 | 0 |
| $t_2$ | 1 | 1 | 1 | 1 | 1 | 1 | 1 | 0 | 1 |
| $t_3$ | 1 | 0 | 1 | 1 | 0 | 1 | 1 | 0 | 1 |
| ⋮ | | | | | | | | | |

FIG. 16A

FIG. 16B

## INTERNATIONAL SEARCH REPORT

| International application No. |
|---|
| PCT/JP2016/052297 |

A. CLASSIFICATION OF SUBJECT MATTER
*G01S17/58*(2006.01)i, *G01P5/26*(2006.01)i, *G01S17/95*(2006.01)i

According to International Patent Classification (IPC) or to both national classification and IPC

B. FIELDS SEARCHED

Minimum documentation searched (classification system followed by classification symbols)
G01S13/00-17/95, G01P5/26

Documentation searched other than minimum documentation to the extent that such documents are included in the fields searched
Jitsuyo Shinan Koho         1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)
IEEE Xplore & Keyword: dopplar, lidar, fourier, accumulate

C. DOCUMENTS CONSIDERED TO BE RELEVANT

| Category* | Citation of document, with indication, where appropriate, of the relevant passages | Relevant to claim No. |
|---|---|---|
| A | JP 2014-35276 A  (Mitsubishi Electric Corp.), 24 February 2014 (24.02.2014), paragraphs [0006] to [0043]; all drawings & US 2015/0226849 A1 paragraphs [0007] to [0060]; all drawings & WO 2014/024644 A1     & EP 2884300 A1 | 1-7 |
| A | JP 2004-285858 A  (Mitsubishi Electric Corp.), 14 October 2004 (14.10.2004), paragraphs [0006] to [0031]; all drawings (Family: none) | 1-7 |
| A | WO 2015/052839 A1  (Mitsubishi Electric Corp.), 16 April 2015 (16.04.2015), entire text; all drawings (Family: none) | 1-7 |

☒ Further documents are listed in the continuation of Box C.          ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 11 April 2016 (11.04.16) | 26 April 2016 (26.04.16) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (January 2015)

**INTERNATIONAL SEARCH REPORT**

International application No.

PCT/JP2016/052297

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2014-81331 A  (Mitsubishi Electric Corp.), 08 May 2014 (08.05.2014), entire text; all drawings (Family: none) | 1-7 |
| A | JP 2005-9956 A  (Mitsubishi Electric Corp.), 13 January 2005 (13.01.2005), abstract (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014002564 A